# EUROPEAN PATENT SPECIFICATION

(11) **EP 2 763 283 B1**
(45) Date of publication and mention of the grant of the patent: **08.07.2015**
(21) Application number: 13153906.6
(22) Date of filing: 04.02.2013
(51) Int. Cl.: H02K 1/27

(54) **A fixing device for brushless motors**
Befestigungsvorrichtung für bürstenlose Motoren
Dispositif de fixation pour moteurs sans balais

(43) Date of publication of application: 06.08.2014
(73) Proprietor: Politubes S.r.L., 20124 Milan (IT)
(72) Inventor: Penzo, Federico, I - 20090 Segrate (Milan) (IT)
(74) Representative: Lunati & Mazzoni S.r.L.

(56) References cited:
- EP-A1- 2 128 963
- WO-A1-85/02725
- JP-A- S61 150 637
- JP-A- S61 207 162

## Description

The present invention relates to a fixing device for brushless motors of the type as recited in the preamble of Claim 1.

In particular, the invention concerns a particular device whereby the magnets can be secured to a rotor of a brushless motor.

As is known, one of the most important examples of a permanent magnet motor is the brushless motor, i.e. a motor with no sliding electrical contacts, known as brushes, on the motor shaft.

The brushless motors currently in use consist of a rotor which constitutes the motion output shaft and to the external surface of which a plurality of permanent magnets are attached, and a stator suitable to emit a magnetic field whereby it controls the rotation of the rotor and, thus, the motion output of the brushless motor.

In particular, to prevent the detachment of the permanent magnets from the rotor, the rotor body is provided with specific seats into which the permanent magnets are at least partially inserted and welded and/or glued in place.

Example of a fixing device for brushless motors are described in JPS61207162A. WO8502725A1, JPS61150637A and EP2128963A1.

The prior art described above has several significant drawbacks.

A first important drawback lies in the fact that, despite the use of welding or adhesives, permanent brushless motors are subject to the risk of detachment of the magnets from the rotor which results in malfunctions of said motors.

As a result of the high speed of rotation of the rotor a considerable centrifugal force is exerted on the permanent magnets, weakening the connection and, thus, resulting in the detachment of the permanent magnets, which produces an unbalanced rotation of the rotor.

Another drawback, due to said deterioration of the fastening between the magnets and the rotor body, is associated with the fact that when the permanent magnets become detached from the rotor they fall into the air gap between the rotor and the stator, causing it to seize up and, thus, damaging said motor.

A further drawback lies in the extreme complexity of the operations to secure the permanent magnets to the rotor body and, thus the high cost of producing brushless motors.

In particular, the process of gluing the magnets to the brushless motor using adhesive tape consists of the following steps: manually positioning the magnets on the motor, using expensive adhesive and heating in an oven at hours approximately 115 °C for several hours to allow the adhesive to polymerize, manually arranging a tape around the rotor, placing the tape and rotor thus assembled in the oven again for several hours at a temperature of 80 °C - 100 °C, controlling the assembly, made complex due to the dulling of the tape in the oven.

Moreover, said adhesives and tapes make the brushless motor heavy and bulky.

Another drawback, which is no less important, lies in the fact that dust can enter the motors and, if it gets inside the air gap, interfere with the magnetic field of the magnets and/or with the rotation of the rotor, resulting in malfunctions of the brushless motor and reducing its service life and efficiency. In this situation the technical purpose of the present invention is to devise a fixing device for a brushless motor able to substantially overcome the drawbacks mentioned above.

Within the sphere of said technical purpose, an important aim of the invention is to provide a fixing device so as to obtain a brushless motor in which the permanent magnets are fastened to the rotor body in an extremely secure manner and, in particular, so as to withstand high centrifugal forces.

In particular, an important aim of the invention is to devise a fixing device to obtain a brushless motor capable of running at high speeds without the risk of detachment of the magnets and, thus, malfunctions or breakdowns.

A further aim of the invention is to obtain an extremely reliable brushless motor characterised by ease of production and, thus, low production costs.

A further aim is to provide a lightweight and compact brushless motor.

The technical purpose and specified aims are achieved with a fixing device for a brushless motor as claimed in the appended Claim 1. Preferred embodiments are described in the dependent claims.

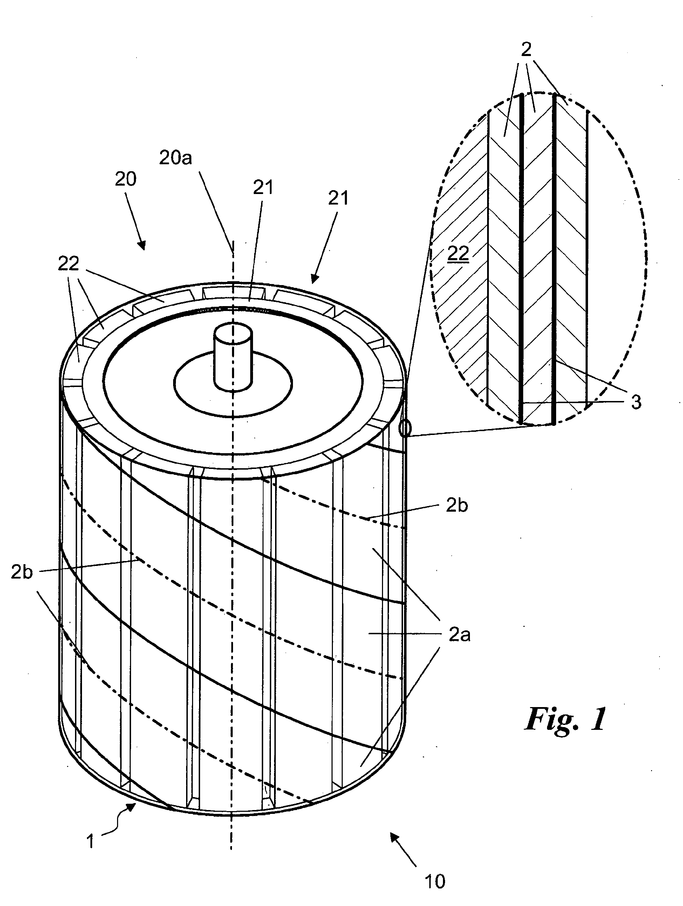

The characteristics and advantages of the invention are clearly evident from the following detailed description of a preferred embodiment thereof, with reference to **Fig. 1****,** which illustrates an application of the fixing device for brushless motors with an enlarged view of a portion of the cross-section thereof.

With reference to said drawing, reference numeral **1** globally denotes the fixing, device for a brushless motor according to the invention.

It is suitable for use with a brushless motor **10,** which, as is known, primarily comprises a rotor **20** suitable to define-an axis of rotation **20a;** and a stator, not illustrated in the drawing, suitable to emit a magnetic field which interacts with the rotor 20 so as to control the rotation thereof about the axis 20a.

The rotor 20 comprises a rotor element **21** and magnets **22,** preferably permanent magnets, suitable to be fastened to the rotor element 21 in correspondence with the outer lateral surface of said rotor element.

Arranged between the stator and the rotor 20, the brushless motor 10 is advantageously provided with the fixing device 1 suitable to be heat-shrunk onto the rotor 20 so as to secure the permanent magnets 22 to the rotor element 21, i.e. a coating/covering substantially made of a material which, when appropriately heated, for instance by means of a jet of hot air or in an oven, shrinks on the rotor 20 so as to enclose it and, thus, block the magnets 22 securely between the fixing device 1 and the rotor element 21.

The fixing device 1 has a multi-layer spiral tubular shape with a thickness substantially comprised between 50 µm and 500 µm and an inside diameter, before being heat-shrunk, greater in size than the outside diameter of the rotor 20. In particular, the difference in size between the inside diameter of the fixing device 1, before being heat-shrunk, and the outside diameter of the rotor 20 is substantially less than 5 mm and, more in particular, substantially comprised between 0.3 mm and 2 mm.

It is also preferably and advantageously characterised by a length, calculated substantially along the axis of rotation 20a and before being heat-shrunk, substantially greater than that of the rotor 20 so that, when heat-shrunk, it also adheres to the front of the magnets 22 and, preferably, to both of the bases of the rotor element 21. Conveniently, the difference between the length of the device 1 and that of the rotor 20 is substantially less than 3 cm and, more appropriately, substantially comprised between 2 cm and 1 cm.

The fixing device 1 comprises a plurality of heat-shrinkable layers **2,** conveniently made of a material characterised by a heat-shrinking temperature substantially equal to 90°C. Preferably, the strips 2a and, thus, the layers 2 are made of transparent heat-shrinkable polyester and, more preferably, of the material marketed by Dupont^{®} under the trade name Mylar HS^{®} or the material marketed by Mitsubishi^{®} under the trade name Hostaphan^{®} or other material characterised by a heat-shrinkage substantially comprised between 15% and 50%.

In detail, each heat-shrinkable layer 2 substantially consists of one or more strips **2a,** extending along a helical, or spiral, trajectory **2b,** and arranged alongside one another and, more precisely, arranged substantially reciprocally in edge-on contact so as to advantageously define a substantially uniform thickness for the heat-shrinkable layer 2 and, thus, for the fixing device 1.

In particular, said thickness of the layer 2 and, thus, of the strips 2a is substantially less than 80 µm and, more in particular, substantially comprised between 10 µm and 50 µm and, yet more in particular, substantially comprised between 16 µm and 37.5 µm.

In addition, the fixing device 1 comprises a plurality of heat-shrinkable layers 2, six at the most, and, arranged between two adjacent heat-shrinkable layers 2, a layer of adhesive **3** suitable to join said two adjacent layers 2 and maintain the strips 2a in the right position and, in particular, the edges of said strips 2 substantially reciprocally in contact.

In order to guarantee the adequate mechanical strength of the fixing device 1, the heat-shrinkable layers 2 and, in particular, the strips 2a of adjacent layers 2 are reciprocally staggered so that the trajectories of extension 2b define a staggered pitch that is preferably substantially equal to half of the width of the strips 2a.

The adhesive layer 3 comprises an adhesive appropriately mixed with a dyeing substance and, in particular, a phthalocyaninic dye and, more in particular, phthalocyanine, so as to define a coloured adhesive layer 3 which is thus clearly visible making it possible to check that the entire layer 2 is coated with adhesive. Conveniently, the thickness of the adhesive layer 3 is substantially less than 5 µm and, more conveniently, substantially equal to 3 µm.

The process for assembling a brushless motor 10, described above in a structural sense, is as follows.

First the process envisages a preparatory step in which the operator prepares the rotor 20 by placing the magnets 22 on the rotor body 21 in correspondence with the outer lateral surface of said rotor element 21, preferably using a thin layer of adhesive.

When the preparatory step is complete, the process envisages the insertion step during which the operator fits the rotor 20 inside the fixing device 1 so that the rotor 20 is housed entirely within the device 1 which, preferably, protrudes from both bases of the rotor 20.

At this point, the heat-shrinking step starts, in which the magnets 22 are secured to the rotor element 21.

In this step the operator heats at least the device 1 and, in particular, the fixing device 1 and the rotor 20 causing the device 1 to shrink and, thus, collapse against the rotor 20 trapping the permanent magnets 20 between the rotor element 21 and the fixing device 1. Heat is preferably applied for less than 10 seconds and more preferably for less than 3 seconds using jets of hot air or in an oven.

In particular, since the fixing device 1 is longer than the rotor 20, it adheres to the lateral surface and also to the bases of the rotor 20 thus preventing any movement of the magnets 22 with respect to the rotor element 21.

At the end of said step, the operator arranges said assembly inside the stator thus completing the assembly of the brushless motor 10.

The invention achieves some important advantages.

A first important advantage lies in the fact that the innovative fixing device 1 achieves a brushless motor 10 characterised by a strong force of constraint between the magnets 22 and the rotor element 21.

Said advantage is given by the presence of the fixing device 1 which, by being heat-shrunk onto the rotor 20, prevents the detachment and/or movement of the magnets 22 with respect to the rotor element 21 and, thus, the problems that typically affect conventional motors such as, for example, unbalanced rotation and seizure of the rotor.

A further advantage resulting from the presence of a plurality of layers, lies in the fact that each surface, and thus each layer, has a much greater mechanical strength and puncture resistance with respect to the resistance within the layer. The multi-layer material thus significantly improves the mechanical strength of the device.

In particular, said high force of constraint is due to the fact that since the fixing device 1 consists of heat-shrinkable layers 2 made of strips 2a arranged edge-on, it has a uniform thickness and, thus, uniform physical and mechanical properties and is thus capable of preventing reciprocal movements between the rotor element 21 and the magnets 22.

Said uniformity of mechanical properties is further enhanced by the fact that the heat-shrinkable layers 2 are conveniently reciprocally staggered so that the device 1 has no areas which are less elastic and/or more fragile.

A further advantage is given by the high reliability and service life of the brushless motor 10.

Said advantage is due, in addition to said force of constraint, to the fact that the presence of the fixing device 1 prevents any dust from coming into contact with the magnets 22 and, thus, reducing the efficiency of said motor.

An important advantage thus lies in the high quality of the fixing device 1 which means the brushless motor 10 has a long service life.

Owing to the presence of the adhesive layer 3, adjacent heat-shrunk layers 2 can be bonded securely so as to avoid any exfoliation of the layers 2.

In particular, said aspect is further enhanced by the presence of a dye which, also owing to the transparency of the heat-shrinkable layers 2, makes it possible to identify any parts/areas between two adjacent layers 2 where there is no adhesive coating 3 and which would be unable to join the layers 2.

A further advantage is given by the use of phthalocyanine dye which is also capable of withstanding high temperatures and so makes it possible to verify the presence of the adhesive layer 3 at any time and to prevent any deterioration thereof due to heating.

Another advantage, which is no less important, lies in the fact that the brushless motor 10 is extremely simple to assemble and can thus be produced at a reduced cost. The various steps required to produce the devices known in the prior art are substantially skipped thanks to the presence of the device 1 which can be fixed to the motor by means of a process, described previously, which is must quicker, easier and can be automated.

Yet another advantage lies in the fact that the motor achieved with the device 1 is lighter and more compact than the motors that use conventional fixing systems.

Modifications and variations may be made to the invention described herein without departing from the scope of the inventive concept. All the elements as described and claimed herein may be replaced with equivalent elements and the scope of the invention includes all other details, materials, shapes and dimensions.

## Claims

1. Fixing device (1) for a brushless motor (10) comprising a rotor (20) comprising a rotor element (21) and magnets (22); said fixing device (1) being suitable to be heat-shrunk onto said rotor (20) so as to secure said magnets (22) between said rotor element (21) and said fixing device (1) and comprising a plurality of heat-shrinkable layers (2) each comprising at least one strip (2a) of heat-shrinkable material; and **characterised in that** said at least one strip (2a) has a helical barycentric trajectory of extension (2b) and is arranged in edge-on contact so as to define a substantially uniform thickness for each of said layers (2); and **in that** said fixing device (1) comprises at least one adhesive layer (3) arranged between said heat-shrinkable layers (2) and comprising a dye.

2. Fixing device (1) as claimed in claim 1, wherein said heat-shrinkable layers (2) present said strips (2a) reciprocally staggered so that said barycentric trajectories of extension (2b) define a staggered pitch.

3. Fixing device (1) as claimed in claim 2, wherein said staggered pitch is substantially equal to half of the width of said at least one strip (2a).

4. Fixing device (1) as claimed in one or more of previous claims, wherein the thickness of said adhesive layer (3) is substantially less than 5 µm.

5. Fixing device (1) as claimed in the preceding claim 1, wherein said dye is a phthalocyaninic dye.

6. Fixing device (1) as claimed in one or more of the preceding claims, wherein the thickness of each of said heat-shrinkable layers (2) is substantially comprised between 16 µm and 37.5 µm.

7. Fixing device (1) as claimed in one or more of the preceding claims, wherein the number of said heat-shrinkable layers (2) is comprised between two and six.

8. Brushless motor (10) comprising a rotor element (21), magnets (22) and said fixing device (1), as claimed in one or more of the preceding claims, suitable to secure said magnets (22) to said rotor element (21).

## Patentansprüche

1. Befestigungsvorrichtung (1) für bürstenlose Motoren (10) mit einem Rotor (20), der einen Rotorkörper (21) und Magnete (22) umfasst; wobei diese Befestigungsvorrichtung (1) geeignet ist, durch Warmschrumpfung an dem genannten Rotor (20) zu haften und so die genannten Magnete (22) zwischen dem genannten Rotorkörper (21) und der genannten Befestigungsvorrichtung (1) zu halten; und die eine Vielzahl an warmschrumpfenden Schichten (2) umfasst, von denen jede mindestens einen Streifen (2a) aus warmschrumpfendem Material umfasst; und **dadurch gekennzeichnet, dass** der genannte mindestens eine Streifen (2a) einen spiralförmigen Verlauf (2a) zum Schwerpunkt aufweist und mit der Rückseite (2a) anliegt und so eine im Wesentlichen gleichmäßige Stärke für jede der genannten Schichten (2) definiert; und dadurch, dass die genannte Befestigungsvorrichtung (1) mindestens eine Klebeschicht (3) zwischen den warmschrumpfenden Schichten mit einem Farbstoff umfasst.

2. Befestigungsvorrichtung (1) nach Anspruch 1, bei der die genannten warmschrumpfenden Schichten (2) die genannten Streifen (2) untereinander verschoben aufweisen, so dass deren genannter spiralförmiger Verlauf (2b) zum Schwerpunkt eine Versetzung definiert.

3. Befestigungsvorrichtung (1) nach Anspruch 2, bei der die genannte Versetzung im Wesentlichen der Hälfte der Breite mindestens eines Streifens (2a) entspricht.

4. Befestigungsvorrichtung (1) nach einer oder mehreren der vorangegangenen Ansprüche, bei der die genannte Klebeschicht (3) eine im Wesentlichen unter 5 µm liegende Stärke aufweist.

5. Befestigungsvorrichtung (1) nach einer der vorangegangenen Ansprüche, bei der der genannte Farbstoff Phtalocyanin enthält.

6. Befestigungsvorrichtung (1) nach einer oder mehreren der vorangegangenen Ansprüche, bei der jede der genannten warmschrumpfenden Schichten (2) eine im Wesentlichen zwischen 16 µm und 37,5 µm liegende Stärke aufweist.

7. Befestigungsvorrichtung (1) nach einer oder mehreren der vorangegangenen Ansprüche, bei der die genannten warmschrumpfenden Schichten (2) in einer Anzahl zwischen zwei und sechs vorliegen.

8. Bürstenloser Motor (10), der einen Rotorkörper (21), Magnete (22) und die genannte Befestigungsvorrichtung (1) umfasst, nach einer oder mehreren der vorangegangenen Ansprüche, der geeignet ist, die genannten Magnete (22) an dem genannten Rotorkörper (21) zu halten.

## Revendications

1. Dispositif de fixation (1) pour moteur sans balais (10) comprenant un rotor (20) comprenant un corps rotorique (21) et des aimants (22) ; ledit dispositif de fixation (1) étant apte à adhérer par thermorétraction audit rotor (20) en assujettissant lesdits aimants (22) entre ledit corps rotorique (21) et ledit dispositif de fixation (1) ; et comprenant une pluralité de couches thermorétractables (2) chacune comprenant au moins une bande (2a) en matériau thermorétractable; et **caractérisé en ce que** ladite au moins une bande (2a) présente une trajectoire de développement barycentrique (2a) hélicoïdale et est approchée de côté (2a) en définissant une épaisseur essentiellement uniforme pour chacune desdites couches (2) ; et **en ce que** ledit dispositif de fixation (1) comprend au moins une couche adhésive (3) interposée entre lesdites couches thermorétractables et comprenant une substance colorante.

2. Dispositif de fixation (1) selon la revendication 1, dans lequel lesdites couches thermorétractables (2) présentent lesdites bandes (2) réciproquement déportées entre elles de sorte que lesdites trajectoires de développement barycentrique (2) définissent un pas de déport.

3. Dispositif de fixation (1) selon la revendication 2, dans lequel ledit pas de déport est essentiellement équivalent à la moitié de la largeur de ladite au moins une bande (2a).

4. Dispositif de fixation (1) selon une ou plusieurs des revendications précédentes, dans lequel ladite couche adhésive (3) a une épaisseur essentiellement inférieure à 5 µm.

5. Dispositif de fixation (1) selon la revendication précédente, dans lequel ladite substance colorante est de nature phtalocyaninique.

6. Dispositif de fixation (1) selon une ou plusieurs des revendications précédentes, dans lequel chacune desdites couches thermorétractables (2) présente une épaisseur essentiellement comprise entre 16 µm et 37,5 µm.

7. Dispositif de fixation (1) selon une ou plusieurs des revendications précédentes, dans lequel lesdites couches thermorétractables (2) sont présentes en nombre compris entre deux et six.

8. Moteur sans balais (10) comprenant un corps rotorique (21) des aimants (22) et ledit dispositif de fixation (1), selon une ou plusieurs des revendications précédentes, apte à assujettir lesdits aimants (22) audit corps rotorique (21).
